(19) Europäisches Patentamt
European Patent Office
Office européen des brevets

(11) **EP 4 521 585 A1**

(12) **EUROPEAN PATENT APPLICATION**
published in accordance with Art. 153(4) EPC

(43) Date of publication:
**12.03.2025 Bulletin 2025/11**

(21) Application number: **22941492.5**

(22) Date of filing: **25.11.2022**

(51) International Patent Classification (IPC):
**H02J 3/38** (2006.01)

(52) Cooperative Patent Classification (CPC):
Y02E 10/56

(86) International application number:
**PCT/CN2022/134429**

(87) International publication number:
**WO 2023/216557 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.05.2022 CN 202210503316**

(71) Applicant: EcoFlow Inc.
**Shenzhen, Guangdong 518000 (CN)**

(72) Inventors:
• ZHANG, Chenhui
  Shenzhen, Guangdong 518000 (CN)
• ZHANG, Hongtao
  Shenzhen, Guangdong 518000 (CN)
• CHEN, Xi
  Shenzhen, Guangdong 518000 (CN)

(74) Representative: Appelt, Christian W.
Boehmert & Boehmert
Anwaltspartnerschaft mbB
Pettenkoferstrasse 22
80336 München (DE)

(54) **CHARGING CONTROL METHOD AND ENERGY STORAGE DEVICE**

(57) A charging control method is provided. The method includes: determining, according to a quantity of parallel photovoltaic panels and a rated maximum output power of each photovoltaic panel, an estimated maximum output power of a photovoltaic module; determining, when the estimated maximum output power is greater than a maximum charging power of a target device, a maximum absolute safe photovoltaic panel parallel quantity Z of the photovoltaic module; operating Z photovoltaic panels, determining an actual maximum output power of each photovoltaic panel in the Z photovoltaic panels, and determining an actual maximum safe photovoltaic panel parallel quantity Y of the photovoltaic module according to the actual maximum output power of each photovoltaic panel in the Z photovoltaic panels and the maximum charging power; and increasing a quantity of operating photovoltaic panels according to Z and Y.

FIG. 3

**Description**

**CROSS-REFERENCE TO RELATED APPLICATIONS**

This application claims priority to Chinese Patent Application No. 202210503316.7, filed with the China National Intellectual Property Administration on May 10, 2022 and entitled "CHARGING CONTROL METHOD AND APPARATUS, AND DEVICE", which is incorporated herein by reference in its entirety.

**TECHNICAL FIELD**

This application relates to the field of solar photovoltaic technologies, and in particular, to a charging control method and an energy storage device.

**BACKGROUND**

The description herein provides only background information related to this application, but does not necessarily constitute an exemplary technology.

With the development of solar photovoltaic technologies, a combination of a photovoltaic module and a mobile energy storage device is widely used in scenarios such as outdoors, remote areas, construction sites, and rescue sites without power supply because a battery level of the mobile energy storage device can continue to be replenished with solar energy outdoors after the mobile energy storage device is used.

Compared with a charging speed when the mobile energy storage device is changed by using an alternating current, a charging speed when the mobile energy storage device is charged by the photovoltaic module is slower. For this problem, more photovoltaic panels are usually connected in parallel to the photovoltaic module to increase a power of the photovoltaic module, so as to improve the charging speed of the mobile energy storage device.

However, connecting more photovoltaic panels in parallel leads to an increase in a charging power of the photovoltaic module, and an excessively great charging power may cause damage to a battery of the mobile energy storage device and easily trigger the overcurrent or overvoltage protection of the mobile energy storage device, resulting in charging interruption.

**SUMMARY**

According to various embodiment of this application, a charging control method and an energy storage device are provided.

According to a first aspect, an embodiment of this application provides a charging control method, including:

determining, according to a quantity of parallel photovoltaic panels and a rated maximum output power of each photovoltaic panel in a photovoltaic module, an estimated maximum output power of the photovoltaic module, where each photovoltaic panel has the same rated maximum output power;

determining, when the estimated maximum output power is greater than a maximum charging power of a target device, a maximum absolute safe photovoltaic panel parallel quantity Z of the photovoltaic module according to the rated maximum output power and the maximum charging power, where Z is a quotient obtained by dividing the maximum charging power by the rated maximum output power;

operating Z photovoltaic panels, determining an actual maximum output power of each photovoltaic panel in the Z photovoltaic panels, and determining an actual maximum safe photovoltaic panel parallel quantity Y of the photovoltaic module according to the actual maximum output power of each photovoltaic panel in the Z photovoltaic panels and the maximum charging power; and

increasing a quantity of operating photovoltaic panels according to the maximum absolute safe photovoltaic panel parallel quantity Z and the actual maximum safe photovoltaic panel parallel quantity Y.

According to a second aspect, an embodiment of this application provides an energy storage device, including: a memory and a processor, where the memory is configured to store a computer program; and the processor is configured to invoke the computer program to implement the method according to the first aspect or any implementation of the first aspect.

Details of one or more embodiments of this application are provided in the accompanying drawings and description below. Other features, objectives, and advantages of this application will become apparent from the specification, the accompanying drawings, and the claims.

**BRIEF DESCRIPTION OF THE DRAWINGS**

To describe the technical solutions in the embodiments of this application or the exemplary technology more clearly, the following briefly introduces the accompanying drawings required for describing the embodiments or the exemplary technology. Apparently, the accompanying drawings in the following description show merely some embodiments of this application, and a person of ordinary skill in the art may still derive other accompanying drawings from the accompanying drawings without creative efforts.

FIG. 1 is a schematic diagram of a connection relationship between a photovoltaic module and a mobile energy storage device according to an embodiment of this application.
FIG. 2 is a structural diagram of a principle of an MPPT apparatus controlling a photovoltaic panel.
FIG. 3 is a schematic flowchart of a charging control method for a photovoltaic module according to an embodiment of this application.
FIG. 4 is another schematic flowchart of a charging control method for a photovoltaic module according to an embodiment of this application.
FIG. 5 is a schematic flowchart of a method for adjusting a quantity of operating photovoltaic panels according to an output current and a maximum charging current of a target device according to an embodiment of this application.
FIG. 6 is a schematic structural diagram of a charging control apparatus for a photovoltaic module according to an embodiment of this application.
FIG. 7 is a schematic structural diagram of an electronic device according to an embodiment of this application.

**DETAILED DESCRIPTION**

With the development of solar photovoltaic technologies, a combination of a photovoltaic module and a mobile energy storage device is widely used in scenarios such as outdoors, remote areas, construction sites, and rescue sites without power supply because a battery level of the mobile energy storage device can continue to be replenished with solar energy outdoors after the mobile energy storage device is used.

For example, in a combination of an energy storage device and two photovoltaic panels with 400 W, the combination can replenish 800 W electric energy to the energy storage device per hour at a maximum power. However, the charging speed is a charging speed under an ideal condition, and the 800 W power per hour generally cannot be achieved due to factors such as irradiation, weather, and devices. Besides, even the ideal charging speed is still slower than a charging speed (for example, 1800 W) of an alternating current.

In addition, in some special usage scenarios, for example, a user may connect an additional battery to the energy storage device in parallel and use the energy storage device to establish an off-grid alternating current energy storage micro-grid, and a large amount of electric energy may be stored (for example, there may be a large reserve of 6 kWh of electric energy in total). In such amount of reserve, long time is consumed for storing the electric energy. In this case, a faster photovoltaic charging speed is required for storage.

For the foregoing problem, more photovoltaic panels are usually connected in parallel to the photovoltaic module to increase a charging current of the photovoltaic module, so as to improve the charging speed of the mobile energy storage device.

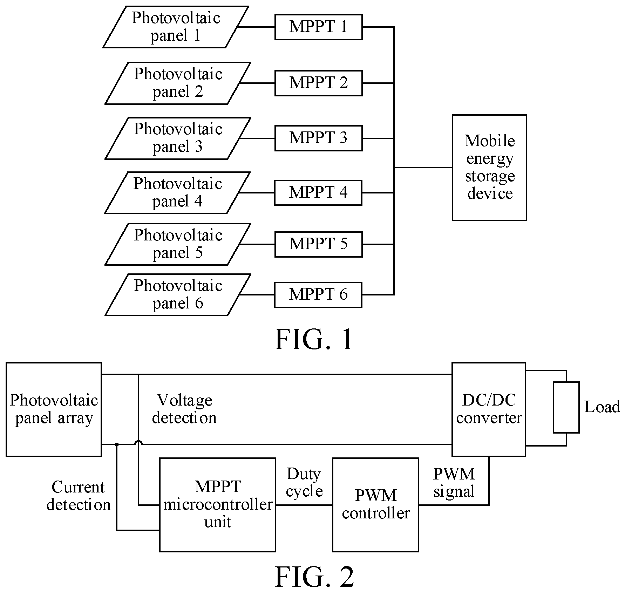

FIG. 1 is a schematic diagram of a connection relationship between a photovoltaic module and a mobile energy storage device according to an embodiment of this application. As shown in FIG. 1, six photovoltaic panels are connected in parallel in the photovoltaic module to charge the energy storage device, and each photovoltaic panel has a corresponding maximum power point tracking (MPPT) apparatus.

Since an actual maximum power of each photovoltaic panel changes as an illumination condition or the like changes, the MPPT apparatus is required to continuously track the actual maximum power of the corresponding photovoltaic panel, so that the photovoltaic panel can output at the actual maximum power.

FIG. 2 is a structural diagram of a principle of an MPPT apparatus controlling a photovoltaic panel. As shown in FIG. 2, a photovoltaic panel is connected to a load through a DC/DC conversion circuit, and an MPPT microcontroller unit (MCU) continuously detect a current or voltage change of the photovoltaic panel (that is, global scanning) and adjusts a duty cycle of a pulse width modulation (PWM) signal of a DC/DC converter according to the change. Since the photovoltaic panel and the DC/DC conversion circuit can be considered as a linear circuit in a short period of time, a maximum output of the photovoltaic panel can be implemented by adjusting an equivalent resistance of the DC/DC conversion circuit and causing the equivalent resistance to be equal to an internal resistance of the photovoltaic panel, that is, an MPPT function of the photovoltaic panel is implemented.

In the photovoltaic module shown in FIG. 1, a theoretical maximum output power of each photovoltaic panel may be 400 W (a voltage corresponding to the maximum output power may be 80 V, and a current may be 5 A), and a theoretical maximum output power after the photovoltaic panels are connected in parallel may be 2400 W. Assuming that a battery in the mobile energy storage device has a theoretical maximum charging power of 1500 W, a rated charging voltage of 60 V, and a rated charging current of 25 A, when the illumination condition is perfect, the maximum output power of the photovoltaic module is far greater than the maximum charging power of the battery in the mobile energy storage device, and under a constant voltage condition, it may be represented as that a current outputted by the photovoltaic module is far greater than a rated safe current that can be borne by the battery in the mobile energy storage device.

In addition, in a household photovoltaic power generation system or a large-scale photovoltaic power generation system, after photoelectric conversion is performed, the photovoltaic module can store electric energy obtained through photoelectric conversion in the energy storage battery, where a charging power and a charging current of the energy storage battery are also subject to certain limitations.

An excessively large charging current may cause damage to the battery in the mobile energy storage device, and when the charging current reaches a current value, charging is generally interrupted after the charging current is detected by a current detection system of the energy storage device for overcurrent protection, resulting in charging interruption.

To resolve the problem of the excessively large charging current, a quantity of parallel photovoltaic panels is generally reduced, so that an ideal maximum output power of the parallel photovoltaic panels is directly less than the rated safe charging power of the battery. However, the perfect illumination condition cannot be reached in most time. As a result, this solution also reduces the charging speed of the mobile energy storage device. In view of this, an embodiment of this application provides a charging control solution, to reduce occurrence of overcurrent while the charging speed of the mobile energy storage device is improved.

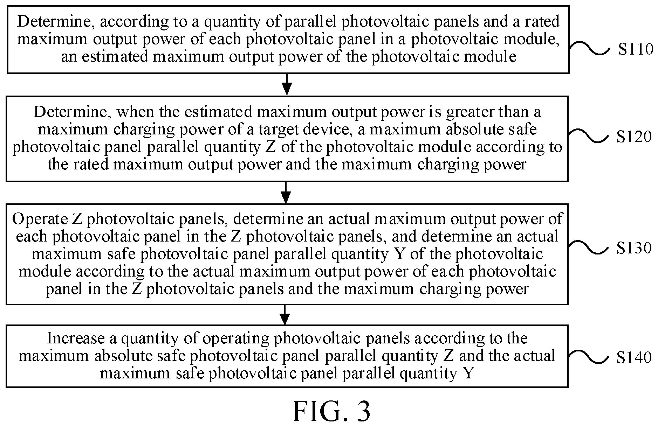

FIG. 3 is a schematic flowchart of a charging control method for a photovoltaic module according to an embodiment of this application. As shown in FIG. 3, the method may include the following steps:

S110. Determine, according to a quantity of parallel photovoltaic panels and a rated maximum output power of each photovoltaic panel in a photovoltaic module, an estimated maximum output power of the photovoltaic module.

Each photovoltaic panel in the photovoltaic module may have the same rated maximum output power, and the rated maximum output power may be set according to a size, performance, and the like of the photovoltaic panel.

Specifically, after the photovoltaic module is started, the quantity of parallel photovoltaic panels in the photovoltaic module can be automatically detected, and the estimated maximum output power of the photovoltaic module is then determined according to the quantity of parallel photovoltaic panels and the set rated maximum output power of each photovoltaic panel. For example, it is detected that the quantity of parallel photovoltaic panels in the photovoltaic module is 6 and the rated maximum output power of each photovoltaic panel is 400 W, and the estimated maximum output power of the photovoltaic module is 6*400=2400 W.

S120. Determine, when the estimated maximum output power is greater than a maximum charging power of a target device, a maximum absolute safe photovoltaic panel parallel quantity Z of the photovoltaic module according to the rated maximum output power and the maximum charging power.

The target device may be a mobile energy storage device. When the estimated maximum output power is greater than the maximum charging power of the target device, under a constant voltage condition, it indicates that a current corresponding to the maximum output power of the photovoltaic module is greater than the maximum charging current of the target device. In this case, the maximum absolute safe photovoltaic panel parallel quantity Z of the photovoltaic module may be determined according to the rated maximum output power and the maximum charging power, and Z may be a quotient obtained by dividing the maximum charging power by the rated maximum output power. For example, the maximum charging power of the target device is 1500 W, the rated maximum output power of each photovoltaic panel is 400 W, and Z=1500/400=3......300, that is, the maximum absolute safe photovoltaic panel parallel quantity of the photovoltaic module is 3.

S130. Operate Z photovoltaic panels, determine an actual maximum output power of each photovoltaic panel in the Z photovoltaic panels, and determine an actual maximum safe photovoltaic panel parallel quantity Y of the photovoltaic module according to the actual maximum output power of each photovoltaic panel in the Z photovoltaic panels and the maximum charging power.

First, Z photovoltaic panels may be operated, actual maximum output powers of the Z photovoltaic panels are then determined according to MPPT apparatuses of the Z photovoltaic panels respectively, and the Z photovoltaic panels are further caused to operate at the actual maximum output powers respectively.

An actual average maximum output power of the Z photovoltaic panels then may be determined according to the actual maximum output power of each photovoltaic panel in the Z photovoltaic panels.

For example, the actual maximum output powers of the Z photovoltaic panels are sequentially $P_{max-1}$, $P_{max-2}$, ..., and $P_{max-Z}$, and
the actual average maximum output power of the Z photovoltaic panels is $P_{max-ave}=(P_{max-1}+P_{max-2}+...+P_{max-Z})/Z$.

A quotient obtained by dividing the maximum charging power by the actual average maximum output power then may be determined as the actual maximum safe photovoltaic panel parallel quantity Y of the photovoltaic module.

For example, the maximum charging power $P_{charging}$ of the target device is 1500 W, the actual average maximum output power $P_{max-ave}$ of the Z photovoltaic panels is 350 W, and 1500/350=4......100, that is, the actual maximum safe photovoltaic panel parallel quantity Y of the photovoltaic module is 4.

S140. Increase a quantity of operating photovoltaic panels according to the maximum absolute safe photovoltaic panel parallel quantity Z and the actual maximum safe photovoltaic panel parallel quantity Y.

When the quantity N of parallel photovoltaic panels in the photovoltaic module is smaller than the actual maximum safe photovoltaic panel parallel quantity Y, an increased quantity of photovoltaic panels may be a difference obtained by subtracting Z from the quantity of parallel photovoltaic panels in the photovoltaic module.

Specifically, the remaining N-Z photovoltaic panels may be operated while the original Z photovoltaic panels are caused to operate at the maximum power, and MPPT apparatuses corresponding to the N-Z photovoltaic panels may be operated simultaneously, to track actual maximum powers of the N-Z photovoltaic panels and cause the N-Z photovoltaic panels to operate at the actual maximum powers respectively.

When the quantity N of parallel photovoltaic panels in the photovoltaic module is greater than or equal to the actual maximum safe photovoltaic panel parallel quantity Y, the increased quantity of photovoltaic panels may be a difference obtained by subtracting Z from the actual maximum safe photovoltaic panel parallel quantity Y.

Specifically, if the quantity N of parallel photovoltaic panels in the photovoltaic module is greater than or equal to the actual maximum safe photovoltaic panel parallel quantity Y, it indicates that if all the parallel photovoltaic panels in the photovoltaic module operate at actual maximum powers, the maximum output power of the photovoltaic module is greater than the maximum charging power of the target device. Therefore, Y-Z photovoltaic panels may be further operated while the original Z photovoltaic panels are caused to operate at the maximum power, and MPPT apparatuses corresponding to the Y-Z photovoltaic panels may be operated simultaneously, to track actual maximum powers of the Y-Z photovoltaic panels and cause the Y-Z photovoltaic panels to operate at the actual maximum powers respectively.

In addition, if an MPPT algorithm used by the MPPT apparatus is an algorithm of a variable step size type, after the system reaches stable through operation for a period of time, a property of tracking a maximum power point will be lost. In this case, a timer may be added, and global scanning may be re-performed at an interval of set time, so that each MPPT apparatus can continuously track the maximum power point.

According to the charging control solution provided in this embodiment of this application, the estimated maximum output power of the photovoltaic module is first determined according to the quantity of parallel photovoltaic panels in the photovoltaic module and the rated maximum output power of each photovoltaic panel, and when the estimated maximum output power is greater than the maximum charging power of the target device, the maximum absolute safe photovoltaic panel parallel quantity Z of the photovoltaic module is determined according to the rated maximum output power and the maximum charging power; Z photovoltaic panels are then operated, the actual maximum output power of each photovoltaic panel in the Z photovoltaic panels is determined, and the actual maximum safe photovoltaic panel parallel quantity Y of the photovoltaic module is determined according to the actual maximum output power of each photovoltaic panel in the Z photovoltaic panels and the maximum charging power; and the quantity of operating photovoltaic panels is increased according to the maximum absolute safe photovoltaic panel parallel quantity Z and the actual maximum safe photovoltaic panel parallel quantity Y, where each photovoltaic panel has the same rated maximum output power, and Z is a quotient obtained by dividing the maximum charging power by the rated maximum output power. In the foregoing solution, Z photovoltaic panels are first operated according to the maximum absolute safe photovoltaic panel parallel quantity Z, so that the mobile energy storage device can be charged at as large a power as possible in an absolute safe case; and the quantity of operating photovoltaic panels is then increased according to the determined actual maximum safe photovoltaic panel parallel quantity of the photovoltaic module, so that a charging power of the photovoltaic module can be adaptively increased in a relative safe case according to an actual operating situation of the photovoltaic module, thereby reducing occurrence of overcurrent while improving the charging speed of the mobile energy storage device.

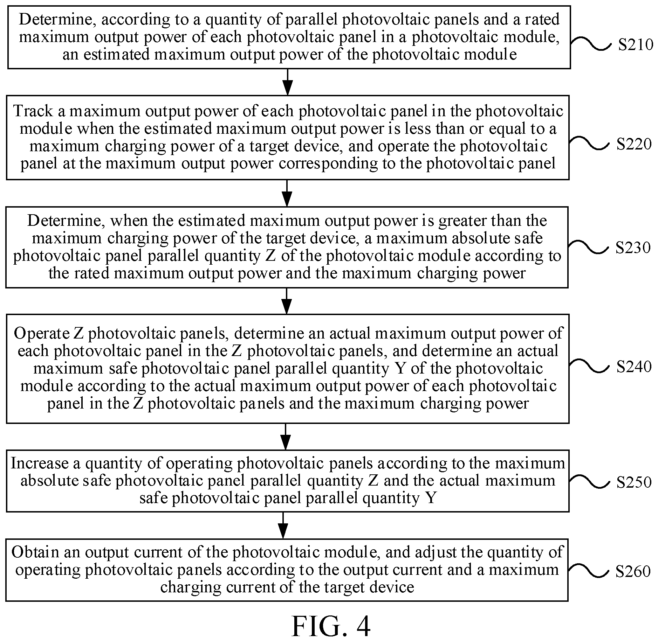

FIG. 4 is another schematic flowchart of a charging control method for a photovoltaic module according to an embodiment of this application. As shown in FIG. 4, the method may include the following steps:

S210. Determine, according to a quantity of parallel photovoltaic panels and a rated maximum output power of each photovoltaic panel in a photovoltaic module, an estimated maximum output power of the photovoltaic module.

For details of Step S210, reference may be made to the description of Step S110 corresponding to the embodiment shown in FIG. 3, and details are not described herein again.

S220. Track a maximum output power of each photovoltaic panel in the photovoltaic module when the estimated maximum output power is less than or equal to a maximum charging power of a target device, and operate the photovoltaic panel at the maximum output power corresponding to the photovoltaic panel.

Specifically, a main control photovoltaic panel in the photovoltaic module may be first started, and the main control photovoltaic panel may be any photovoltaic panel in the photovoltaic module. For example, the first photovoltaic panel may be first started, global voltage scanning is then performed on the first photovoltaic panel according to a first MPPT apparatus corresponding to the first photovoltaic panel, to determine a maximum output power of the first photovoltaic panel and a voltage $V_{pmax-1}$ corresponding to the maximum output power, and the first MPPT apparatus is set as a main control apparatus.

The photovoltaic panel in the photovoltaic module generally may be a foldable mobile photovoltaic charging panel, and in a case that the user does not violate common sense and deliberately place the photovoltaic panel in shadow, influence of average irradiation and other external factors on each photovoltaic panel is relatively close. In addition, manufacturing processes of the photovoltaic panels in the module are also the same. Therefore, a scanning range of another photovoltaic panel may be reduced according to the voltage $V_{pmax-1}$ corresponding to the maximum output power of the first photovoltaic panel.

Specifically, the scanning range of the another photovoltaic panel may be reduced according to the following Formula (1):

$$\text{Vrange}_{n+1} = \begin{cases} \text{Upper limint} = V_{pmax-n} + 30\% \times V_{max} \times C^{n-1} \\ \text{Lower limint} = V_{pmax-n} - 30\% \times V_{max} \times C^{n-1} \end{cases} C \qquad C^{n-1} \geqslant 0.3 \quad (1)$$

$\text{Vrange}_{n+1}$ represents a voltage scanning range of an $(n+1)^{th}$ photovoltaic panel, Upper limint represents an upper limit of a scanning voltage, Lowre limint represents a lower limit of the scanning voltage, $V_{pmax-n}$ represents a voltage corresponding to a maximum output power of an $n^{th}$ photovoltaic panel, $V_{max}$ represents a maximum working voltage of the photovoltaic panel, and $C^{n-1}$ is a reduction coefficient. C may be a set fixed value such as 0.9, or may be adjusted according to a local illumination situation, for example, may be adjusted between 0.8 to 0.99 according to the local illumination situation.

It may be understood that, in an actual scanning process, if the upper limit of the scanning voltage of the $(n+1)^{th}$ photovoltaic panel exceeds a rated voltage scanning upper limit of the $n^{th}$ photovoltaic panel, the upper limit of the scanning voltage of the $(n+1)^{th}$ photovoltaic panel may be adjusted to the rated voltage scanning upper limit of the $n^{th}$ photovoltaic panel, and the $(n+1)^{th}$ photovoltaic panel is scanned according to an adjusted voltage scanning range.

After scanning is performed on each photovoltaic panel, the obtained maximum output power of each photovoltaic panel may be sent to the main control apparatus, and the main control apparatus may compare the maximum output power of the another photovoltaic panel with the maximum output power of the main control photovoltaic panel separately. If a ratio of an absolute value of a difference between the maximum output power of a photovoltaic panel and the maximum output power of the main control photovoltaic panel to the maximum output power of the main control photovoltaic panel is greater than a target ratio, it indicates that tracking on the maximum output power of the photovoltaic panel is abnormal, and global voltage scanning may be re-performed on the photovoltaic panel.

The target ratio may be determined according to the maximum output power of the main control photovoltaic panel. For example, the target ratio may be 30% of the maximum output power of the main control photovoltaic panel.

The target ratio may alternatively be adjusted according to a local weather change frequency, for example, may be adjusted to a smaller value such as 10% or 20%, to improve the system precision; or may be adjusted to a greater value such as 35% or 40%, to improve the system accuracy.

If a ratio of an absolute value of a difference between the maximum output power of a photovoltaic panel and the maximum output power of the main control photovoltaic panel to the maximum output power of the main control photovoltaic panel is less than or equal to the target ratio, it indicates that tracking on the maximum output power of the photovoltaic panel is normal.

It may be understood that, the maximum output power of each photovoltaic panel in the photovoltaic module is determined at an interval of set time (for example, 10 minutes), to update the maximum output power of each photovoltaic panel in real time.

S230. Determine, when the estimated maximum output power is greater than the maximum charging power of the target device, a maximum absolute safe photovoltaic panel parallel quantity Z of the photovoltaic module according to the rated maximum output power and the maximum charging power.

S240. Operate Z photovoltaic panels, determine an actual maximum output power of each photovoltaic panel in the Z photovoltaic panels, and determine an actual maximum safe photovoltaic panel parallel quantity Y of the photovoltaic module according to the actual maximum output power of each photovoltaic panel in the Z photovoltaic panels and the maximum charging power.

S250. Increase a quantity of operating photovoltaic panels according to the maximum absolute safe photovoltaic panel parallel quantity Z and the actual maximum safe photovoltaic panel parallel quantity Y.

For details of Step S230 to Step S250, reference may be made to the description of Step S120 to Step S140 corresponding to the embodiment shown in FIG. 3, and details are not described herein again.

S260. Obtain an output current of the photovoltaic module, and adjust the quantity of operating photovoltaic panels according to the output current and a maximum charging current of the target device.

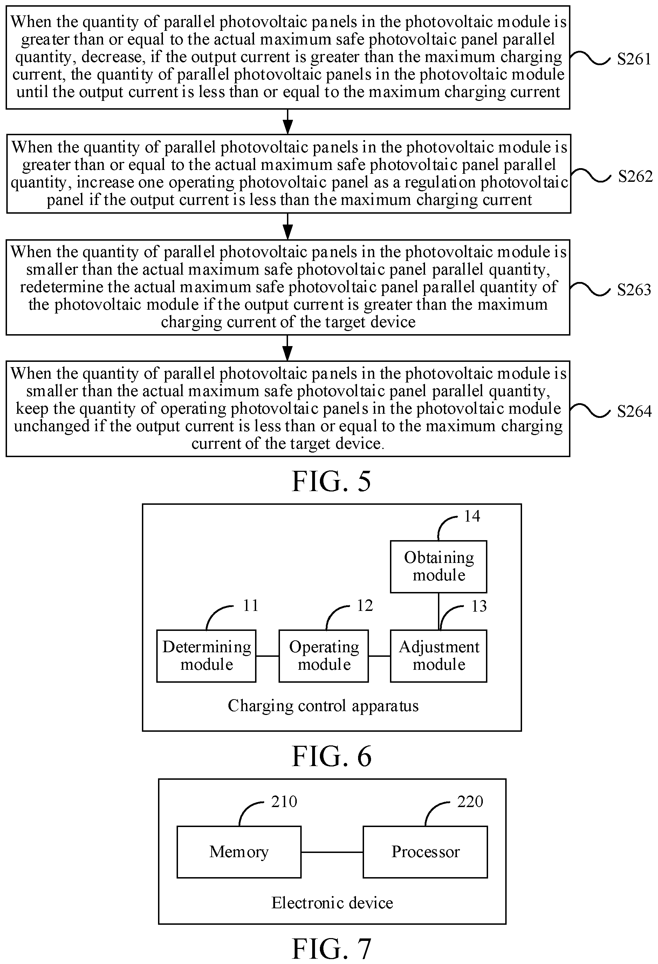

FIG. 5 is a schematic flowchart of a method for adjusting a quantity of operating photovoltaic panels according to an output current and a maximum charging current of a target device according to an embodiment of this application. As shown in FIG. 5, the method may include the following steps:

S261. When the quantity of parallel photovoltaic panels in the photovoltaic module is greater than or equal to the actual maximum safe photovoltaic panel parallel quantity, decrease, if the output current is greater than the maximum charging current, the quantity of parallel photovoltaic panels in the photovoltaic module until the output current is less than or equal to the maximum charging current.

Specifically, in a case that the quantity N of parallel photovoltaic panels in the photovoltaic module is greater than or equal to the actual maximum safe photovoltaic panel parallel quantity Y, the photovoltaic module first operates Y photovoltaic panels, where the Y photovoltaic panels all operate at the respective actual maximum powers. In this case, if it is detected that the output current of the photovoltaic module is greater than the maximum charging current of the target device, it indicates that the photovoltaic panels may have different specifications, or one or more photovoltaic panels in the Z photovoltaic panels are covered by shadow during calculation of the actual maximum output power, resulting in an inaccurate actual maximum output power obtained through calculation. Therefore, the quantity of operating photovoltaic panels in the photovoltaic module may be decreased.

In a decreasing process, the output current of the photovoltaic module may be continuously detected, every time one operating photovoltaic panel is reduced, the output current of the photovoltaic module is re-compared with the maximum charging current of the target device, and if the output current of the photovoltaic module is greater than the maximum charging current of the target device, decreasing continues to be performed until the output current of the photovoltaic module is less than or equal to the maximum charging current of the target device.

When an operating photovoltaic panel is reduced and it is detected that the output current of the photovoltaic module is less than the maximum charging current of the target device, the output current of the photovoltaic module has been already very close to the maximum charging current of the target device, and to maximize the charging efficiency of the target device (that is, cause the output current of the photovoltaic module to be closer to the maximum charging current of the target device), one operating photovoltaic panel may be additionally added as a regulation photovoltaic panel. At present, in the photovoltaic module, other photovoltaic panels in addition to the newly added regulation photovoltaic panel all operate at the maximum power, the newly added regulation photovoltaic panel may be scanned, and the output current of the photovoltaic module is detected continuously. Once it is detected that the output current is greater than the maximum charging current, a working voltage of the regulation photovoltaic panel may be adjusted to a previous scanning voltage of a current scanning voltage, so that the output current of the photovoltaic module is closer to the maximum charging current of the target device.

Further, if the added operating regulation photovoltaic panel operates at the maximum power obtained through scanning and the detected output current is still less than the maximum charging current, it indicates that the illumination condition is suddenly weakened due to factors such as weather changes or shadow, and the actual maximum output power of each photovoltaic panel in the photovoltaic module is also reduced suddenly, so that more photovoltaic panels need to be operated to ensure a charging speed of the target device. Therefore, Y-Z newly operated photovoltaic panels may be turned off, the actual maximum power of each of the remaining Z photovoltaic panels is retracked, and the actual maximum safe photovoltaic panel parallel quantity of the photovoltaic module is redetermined.

In addition, if the detected output current is still greater than the maximum charging current when the regulation photovoltaic panel is turned off, it indicates that the illumination condition is suddenly strengthened due to factors such as weather changes, and the actual maximum output power of each photovoltaic panel in the photovoltaic module is also increased suddenly, so that the quantity of operating photovoltaic panels needs to be reduced. Therefore, the Y-Z newly operated photovoltaic panels may be turned off, the actual maximum power of each of the remaining Z photovoltaic panels is retracked, and the actual maximum safe photovoltaic panel parallel quantity of the photovoltaic module is redetermined.

S262. When the quantity of parallel photovoltaic panels in the photovoltaic module is greater than or equal to the actual maximum safe photovoltaic panel parallel quantity, increase one operating photovoltaic panel as a regulation photovoltaic panel if the output current is less than the maximum charging current.

Specifically, when the quantity of parallel photovoltaic panels in the photovoltaic module is greater than or equal to the actual maximum safe photovoltaic panel parallel quantity, if the output current is less than the maximum charging current, to maximize the charging efficiency of the target device (that is, cause the output current of the photovoltaic module to be closer to the maximum charging current of the target device), one operating photovoltaic panel may be additionally added as the regulation photovoltaic panel. At present, in the photovoltaic module, other photovoltaic panels in addition to the newly added regulation photovoltaic panel all operate at the maximum power, the newly added regulation photovoltaic panel may be scanned, and the output current of the photovoltaic module is detected continuously. Once it is detected that the output current is greater than the maximum charging current, a working voltage of the regulation photovoltaic panel may be adjusted to a previous scanning voltage of a current scanning voltage, so that the output current of the photovoltaic module is closer to the maximum charging current of the target device.

Further, if the added operating regulation photovoltaic panel operates at the maximum power obtained through scanning and the detected output current is still less than the maximum charging current, it indicates that the illumination condition is suddenly weakened due to factors such as weather changes or shadow, and the actual maximum output power of each photovoltaic panel in the photovoltaic module is also reduced suddenly, so that more photovoltaic panels need to be operated to ensure a charging speed of the target device. Therefore, Y-Z newly operated photovoltaic panels may be turned off, the actual maximum power of each of the remaining Z photovoltaic panels is retracked, and the actual maximum safe photovoltaic panel parallel quantity of the photovoltaic module is redetermined.

**In** addition, if the detected output current is still greater than the maximum charging current when the regulation photovoltaic panel is turned off, it indicates that the illumination condition is suddenly strengthened due to factors such as weather changes, and the actual maximum output power of each photovoltaic panel in the photovoltaic module is also increased suddenly, so that the quantity of operating photovoltaic panels needs to be reduced. Therefore, the Y-Z newly operated photovoltaic panels may be turned off, the actual maximum power of each of the remaining Z photovoltaic panels is retracked, and the actual maximum safe photovoltaic panel parallel quantity of the photovoltaic module is redetermined.

S263. When the quantity of parallel photovoltaic panels in the photovoltaic module is smaller than the actual maximum safe photovoltaic panel parallel quantity, redetermine the actual maximum safe photovoltaic panel parallel quantity of the photovoltaic module if the output current is greater than the maximum charging current of the target device.

Specifically, in a case that the quantity N of parallel photovoltaic panels in the photovoltaic module is smaller than the actual maximum safe photovoltaic panel parallel quantity Y, the N photovoltaic panels in the photovoltaic module all operate at the respective actual maximum powers. In this case, if it is detected that the output current of the photovoltaic module is greater than the maximum charging current of the target device, it indicates that the illumination condition is strengthened suddenly, and the actual maximum output power of each photovoltaic panel in the photovoltaic module is also increased suddenly. Therefore, the N-Z newly operated photovoltaic panels may be turned off, the actual maximum power of each of the remaining Z photovoltaic panels is retracked, and the actual maximum safe photovoltaic panel parallel quantity of the photovoltaic module is redetermined.

S264. When the quantity of parallel photovoltaic panels in the photovoltaic module is smaller than the actual maximum safe photovoltaic panel parallel quantity, keep the quantity of operating photovoltaic panels in the photovoltaic module unchanged if the output current is less than or equal to the maximum charging current of the target device.

Specifically, in a case that the quantity N of parallel photovoltaic panels in the photovoltaic module is smaller than the actual maximum safe photovoltaic panel parallel quantity Y, since all the photovoltaic panels in the photovoltaic module operate at the respective actual maximum powers in this case, even if it is detected that the output current of the photovoltaic module is less than or equal to the maximum charging current of the target device, a charging speed of the photovoltaic module cannot be improved. In this case, the photovoltaic module may be kept operating at the maximum power.

A person skilled in the art may understand that, the foregoing embodiments are exemplary and are not intended to limit this application. In a possible case, an execution sequence of one or more steps in the foregoing steps may be adjusted, or the foregoing steps may be selectively combined to obtain one or more first embodiments. A person skilled in the art may arbitrarily select and combine the foregoing steps according to requirements, and all combinations do not depart from the essence of the solutions of this application all fall within the protection scope of this application.

Based on the same invention concept, as an implementation of the foregoing method, an embodiment of this application provides a charging control apparatus. The apparatus embodiment corresponds to the foregoing method embodiments, and for ease of reading, detailed content in the foregoing method embodiments is not described one by one in the apparatus embodiment. However, it should be clear that the apparatus in this embodiment can correspondingly implement all content in the foregoing method embodiments.

FIG. 6 is a schematic structural diagram of a charging control apparatus for a photovoltaic module according to an embodiment of this application. As shown in FIG. 6, the charging control apparatus provided in this embodiment may include: a determining module 11, an operating module 12, and an adjustment module 13, where

the determining module 11 is configured to: determine, according to a quantity of parallel photovoltaic panels and a rated maximum output power of each photovoltaic panel in a photovoltaic module, an estimated maximum output power of the photovoltaic module, where each photovoltaic panel has the same rated maximum output power; and determine, when the estimated maximum output power is greater than a maximum charging power of a target device, a maximum absolute safe photovoltaic panel parallel quantity Z of the photovoltaic module according to the rated maximum output power and the maximum charging power, where Z is a quotient obtained by dividing the maximum charging power by the rated maximum output power;

the operating module 12 is configured to operate Z photovoltaic panels;

the determining module 11 is further configured to: determine an actual maximum output power of each photovoltaic panel in the Z photovoltaic panels, and determine an actual maximum safe photovoltaic panel parallel quantity Y of the photovoltaic module according to the actual maximum output power of each photovoltaic panel in the Z photovoltaic panels and the maximum charging power; and

the adjustment module 13 is configured to increase a quantity of operating photovoltaic panels according to the maximum absolute safe photovoltaic panel parallel quantity Z and the actual maximum safe photovoltaic panel parallel quantity Y.

The charging control apparatus for a photovoltaic module provided in this embodiment may be configured to perform the foregoing method embodiments, and their implementation principles and technical effects are similar. Details are not described herein again.

Based on the same invention concept, an embodiment of this application further provides an electronic device. FIG. 7 is a schematic structural diagram of an electronic device according to an embodiment of this application. As shown in FIG. 7, the electronic device provided in this embodiment includes: a memory 210 and a processor 220, where the memory 210 is configured to store a computer program; and The processor 220 is configured to invoke the computer program to implement the method described in the foregoing method embodiments.

The electronic device provided in this embodiment may perform the foregoing method embodiments, and their implementation principles and technical effects are similar. Details are not described herein again.

An embodiment of this application further provides a computer-readable storage medium, storing a computer program, where when the computer program is executed by a processor, the method described in the foregoing method embodiments is implemented.

An embodiment of this application further provides a computer program product, and when the computer program is run on an electronic device, the electronic device is caused to implement the method described in the method embodiments.

An embodiment of this application further provides an energy storage device, including a memory and a processor, where the memory is configured to store a computer program; and the processor is configured to invoke the computer program to implement the method described in the foregoing embodiments. The energy storage device further includes a battery module, and the processor is further configured to utilize, after a photovoltaic module operates, a direct current outputted by the photovoltaic module after photoelectric conversion to charge the battery module.

It should be understood that, the method and apparatus/system disclosed in this application may be implemented in another manner. For example, the described apparatus embodiment is merely an example. For example, the module or unit division is merely logical function division and there may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, that is, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units can exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related art, or part of the technical solutions may be implemented in the form of a computer software product. The computer software product is stored in a storage medium, and includes several instructions for instructing a computer device (which may be a personal computer, a server, a network device, or the like) to perform all or some of the steps of the method described in the embodiment of this application. The foregoing storage medium may include, but is not limited to: any medium that can store program code, such as a USB flash drive, a removable hard disk, a ROM, a RAM, a magnetic disk, or an optical disc.

The foregoing description describes merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A charging control method, comprising:

   determining, according to a quantity of parallel photovoltaic panels and a rated maximum output power of each photovoltaic panel in a photovoltaic module, an estimated maximum output power of the photovoltaic module, wherein each photovoltaic panel has the same rated maximum output power;
   determining, when the estimated maximum output power is greater than a maximum charging power of a target device, a maximum absolute safe photovoltaic panel parallel quantity Z of the photovoltaic module according to the rated maximum output power and the maximum charging power, wherein Z is a quotient obtained by dividing the maximum charging power by the rated maximum output power;

operating Z photovoltaic panels, determining an actual maximum output power of each photovoltaic panel in the Z photovoltaic panels, and determining an actual maximum safe photovoltaic panel parallel quantity Y of the photovoltaic module according to the actual maximum output power of each photovoltaic panel in the Z photovoltaic panels and the maximum charging power; and

increasing a quantity of operating photovoltaic panels according to the maximum absolute safe photovoltaic panel parallel quantity Z and the actual maximum safe photovoltaic panel parallel quantity Y.

2. The method according to claim 1, wherein the determining an actual maximum safe photovoltaic panel parallel quantity Y of the photovoltaic module according to the actual maximum output power of each photovoltaic panel in the Z photovoltaic panels and the maximum charging power comprises:

determining an actual average maximum output power of the Z photovoltaic panels according to the actual maximum output power of each photovoltaic panel in the Z photovoltaic panels; and

determining a quotient obtained by dividing the maximum charging power by the actual average maximum output power as the actual maximum safe photovoltaic panel parallel quantity Y of the photovoltaic module.

3. The method according to claim 1, wherein the increasing a quantity of operating photovoltaic panels according to the maximum absolute safe photovoltaic panel parallel quantity Z and the actual maximum safe photovoltaic panel parallel quantity Y comprises that:

when the quantity of parallel photovoltaic panels in the photovoltaic module is smaller than the actual maximum safe photovoltaic panel parallel quantity Y, an increased quantity of photovoltaic panels is a difference obtained by subtracting Z from the quantity of parallel photovoltaic panels in the photovoltaic module; and

when the quantity of parallel photovoltaic panels in the photovoltaic module is greater than or equal to the actual maximum safe photovoltaic panel parallel quantity Y, the increased quantity of photovoltaic panels is a difference obtained by subtracting Z from the actual maximum safe photovoltaic panel parallel quantity Y.

4. The method according to claim 1, wherein the method further comprises:
obtaining an output current of the photovoltaic module, and adjusting the quantity of operating photovoltaic panels according to the output current and a maximum charging current of the target device.

5. The method according to claim 4, wherein the adjusting the quantity of operating photovoltaic panels according to the output current and a maximum charging current of the target device comprises:

when the quantity of parallel photovoltaic panels in the photovoltaic module is greater than or equal to the actual maximum safe photovoltaic panel parallel quantity Y, decreasing, if the output current is greater than the maximum charging current, the quantity of parallel photovoltaic panels in the photovoltaic module until the output current is less than or equal to the maximum charging current; and

increasing one operating photovoltaic panel as a regulation photovoltaic panel if the output current is less than the maximum charging current.

6. The method according to claim 5, wherein the method further comprises:
adjusting an output power of the regulation photovoltaic panel, so that the output current of the photovoltaic module is close to the maximum charging current.

7. The method according to claim 6, wherein the method further comprises:
redetermining the actual maximum safe photovoltaic panel parallel quantity Y of the photovoltaic module if the output current of the photovoltaic module is less than the maximum charging current when the regulation photovoltaic panel operates at the actual maximum output power or the output current of the photovoltaic module is greater than the maximum charging current when the regulation photovoltaic panel is turned off.

8. The method according to claim 1, wherein tracking a maximum output power of each photovoltaic panel in the photovoltaic module when the estimated maximum output power is less than or equal to the maximum charging power of the target device; and

operating each photovoltaic panel at the maximum output power corresponding to each photovoltaic panel.

9. The method according to any one of claims 4 to 7, wherein after the adjusting the quantity of operating photovoltaic panels according to the output current and a maximum charging current of the target device, the method further comprises:

when the quantity of parallel photovoltaic panels in the photovoltaic module is smaller than the actual maximum safe photovoltaic panel parallel quantity, redetermining the actual maximum safe photovoltaic panel parallel quantity of the photovoltaic module if the output current is greater than the maximum charging current of the target device.

10. An energy storage device, comprising a memory and a processor, wherein the memory is configured to store a computer program; and the processor is configured to invoke the computer program to implement the method according to any one of claims 1 to 9.

11. The energy storage device according to claim 10, wherein the energy storage device further comprises a battery module, and the processor is further configured to utilize, after a photovoltaic module operates, a direct current outputted by the photovoltaic module after photoelectric conversion to charge the battery module.

FIG. 1

FIG. 2

Determine, according to a quantity of parallel photovoltaic panels and a rated maximum output power of each photovoltaic panel in a photovoltaic module, an estimated maximum output power of the photovoltaic module    S110

Determine, when the estimated maximum output power is greater than a maximum charging power of a target device, a maximum absolute safe photovoltaic panel parallel quantity Z of the photovoltaic module according to the rated maximum output power and the maximum charging power    S120

Operate Z photovoltaic panels, determine an actual maximum output power of each photovoltaic panel in the Z photovoltaic panels, and determine an actual maximum safe photovoltaic panel parallel quantity Y of the photovoltaic module according to the actual maximum output power of each photovoltaic panel in the Z photovoltaic panels and the maximum charging power    S130

Increase a quantity of operating photovoltaic panels according to the maximum absolute safe photovoltaic panel parallel quantity Z and the actual maximum safe photovoltaic panel parallel quantity Y    S140

FIG. 3

Determine, according to a quantity of parallel photovoltaic panels and a rated maximum output power of each photovoltaic panel in a photovoltaic module, an estimated maximum output power of the photovoltaic module ⟶ S210

Track a maximum output power of each photovoltaic panel in the photovoltaic module when the estimated maximum output power is less than or equal to a maximum charging power of a target device, and operate the photovoltaic panel at the maximum output power corresponding to the photovoltaic panel ⟶ S220

Determine, when the estimated maximum output power is greater than the maximum charging power of the target device, a maximum absolute safe photovoltaic panel parallel quantity Z of the photovoltaic module according to the rated maximum output power and the maximum charging power ⟶ S230

Operate Z photovoltaic panels, determine an actual maximum output power of each photovoltaic panel in the Z photovoltaic panels, and determine an actual maximum safe photovoltaic panel parallel quantity Y of the photovoltaic module according to the actual maximum output power of each photovoltaic panel in the Z photovoltaic panels and the maximum charging power ⟶ S240

Increase a quantity of operating photovoltaic panels according to the maximum absolute safe photovoltaic panel parallel quantity Z and the actual maximum safe photovoltaic panel parallel quantity Y ⟶ S250

Obtain an output current of the photovoltaic module, and adjust the quantity of operating photovoltaic panels according to the output current and a maximum charging current of the target device ⟶ S260

FIG. 4

When the quantity of parallel photovoltaic panels in the photovoltaic module is greater than or equal to the actual maximum safe photovoltaic panel parallel quantity, decrease, if the output current is greater than the maximum charging current, the quantity of parallel photovoltaic panels in the photovoltaic module until the output current is less than or equal to the maximum charging current — S261

When the quantity of parallel photovoltaic panels in the photovoltaic module is greater than or equal to the actual maximum safe photovoltaic panel parallel quantity, increase one operating photovoltaic panel as a regulation photovoltaic panel if the output current is less than the maximum charging current — S262

When the quantity of parallel photovoltaic panels in the photovoltaic module is smaller than the actual maximum safe photovoltaic panel parallel quantity, redetermine the actual maximum safe photovoltaic panel parallel quantity of the photovoltaic module if the output current is greater than the maximum charging current of the target device — S263

When the quantity of parallel photovoltaic panels in the photovoltaic module is smaller than the actual maximum safe photovoltaic panel parallel quantity, keep the quantity of operating photovoltaic panels in the photovoltaic module unchanged if the output current is less than or equal to the maximum charging current of the target device. — S264

## FIG. 5

14 — Obtaining module

11 — Determining module

12 — Operating module

13 — Adjustment module

Charging control apparatus

## FIG. 6

210 — Memory

220 — Processor

Electronic device

## FIG. 7

## INTERNATIONAL SEARCH REPORT

| International application No. |
| --- |
| **PCT/CN2022/134429** |

**A. CLASSIFICATION OF SUBJECT MATTER**

H02J3/38(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, EPTXT, USTXT, CNKI, IEEE: 光伏, 太阳能, 并联, 配置, 功率, 额定, 标称, 效率, 实际, 充电, 过充, 安全, 调整, charg???, photovoltaic, parallel, power, rated, safety, efficiency, overcurrent, adjust???

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114884122 A (SHENZHEN ECOFLOW INNOVATION TECHNOLOGY CO., LTD.) 09 August 2022 (2022-08-09) claims 1-10, and description, paragraphs 50-140 | 1-11 |
| Y | CN 108767044 A (BEIJING HANERGY SOLAR POWER INVESTMENT CO., LTD.) 06 November 2018 (2018-11-06) description, paragraphs 94-215, and figures 1-6 | 1-11 |
| Y | CN 107800353 A (YIN XIYUE) 13 March 2018 (2018-03-13) description, paragraphs 3-18, and figure 1 | 1-11 |
| Y | CN 202353230 U (TIANJIN YONGMING NEW ENERGY TECHNOLOGY CO., LTD.) 25 July 2012 (2012-07-25) description, paragraphs 31-47, and figures 1-2 | 1-11 |
| A | CN 106814265 A (CHINA ELECTRIC POWER RESEARCH INSTITUTE STATE GRID CORP. CHINA et al.) 09 June 2017 (2017-06-09) entire document | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 February 2023** | **14 February 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/134429** |

**C.     DOCUMENTS CONSIDERED TO BE RELEVANT**

| Category* | Citation of document, with indication, where appropriate, of the relevant passages | Relevant to claim No. |
|---|---|---|
| A | CN 110868153 A (SHANGHAI KOSTAL-HUAYANG AUTOMOTIVE ELECTRIC CO., LTD. et al.) 06 March 2020 (2020-03-06)<br>entire document | 1-11 |
| A | CN 112994107 A (HUAWEI TECHNOLOGIES CO., LTD.) 18 June 2021 (2021-06-18)<br>entire document | 1-11 |
| A | US 2014058688 A1 (HITACHI, LTD.) 27 February 2014 (2014-02-27)<br>entire document | 1-11 |

Form PCT/ISA/210 (second sheet) (July 2022)

**INTERNATIONAL SEARCH REPORT**
**Information on patent family members**

International application No.

**PCT/CN2022/134429**

| Patent document cited in search report | | | Publication date (day/month/year) | Patent family member(s) | | | Publication date (day/month/year) |
|---|---|---|---|---|---|---|---|
| CN | 114884122 | A | 09 August 2022 | None | | | |
| CN | 108767044 | A | 06 November 2018 | None | | | |
| CN | 107800353 | A | 13 March 2018 | CN | 107800353 | B | 16 August 2019 |
| CN | 202353230 | U | 25 July 2012 | None | | | |
| CN | 106814265 | A | 09 June 2017 | None | | | |
| CN | 110868153 | A | 06 March 2020 | CN | 110868153 | B | 30 July 2021 |
| CN | 112994107 | A | 18 June 2021 | EP | 4071957 | A1 | 12 October 2022 |
| | | | | US | 2022329075 | A1 | 13 October 2022 |
| US | 2014058688 | A1 | 27 February 2014 | US | 9506971 | B2 | 29 November 2016 |
| | | | | JP | 2014045073 | A | 13 March 2014 |
| | | | | JP | 6075997 | B2 | 08 February 2017 |

Form PCT/ISA/210 (patent family annex) (July 2022)

**REFERENCES CITED IN THE DESCRIPTION**

**Patent documents cited in the description**

- CN 202210503316